# EUROPÄISCHE PATENTSCHRIFT

(11) **EP 0 504 745 B1**
(45) Veröffentlichungstag und Bekanntmachung des Hinweises auf die Patenterteilung: **18.01.1995**
(21) Anmeldenummer: 92104333.7
(22) Anmeldetag: 13.03.1992
(51) Int. Cl.: B23D 57/00

(54) **Handwerkzeugmaschine mit Leitstrahl**
Hand-tool with guide-beam
Outil à main avec rayon de guidage

(30) Priorität: 16.03.1991 DE 4108710
(43) Veröffentlichungstag der Anmeldung: 23.09.1992
(73) Patentinhaber: ROBERT BOSCH GMBH, 70442 Stuttgart (DE)
(72) Erfinder: Kuhlmann, Gerhard, W-7000 Stuttgart 30 (DE); Dobler, Klaus, Dr. Dr.-Ing., W-7016 Gerlingen (DE); Sautter, Helmut, Dr., W-7257 Ditzingen (DE); Schink, Rainer, W-7250 Leonberg (DE); Gormanns, Dieter, W-7016 Gerlingen (DE); Arndt, Stefan, Dr. Dipl.-Phys., W-7000 Stuttgart 80 (DE)

(56) Entgegenhaltungen:
- DE-A- 3 922 849
- DE-U- 9 010 716
- US-A- 1 953 299
- US-A- 2 806 492
- US-A- 3 457 796
- US-A- 4 833 782

## Beschreibung

Die Erfindung geht aus von einer Handwerkzeugmaschine nach dem Oberbegriff des Anspruchs 1. Aus der US-A 4 833 782 ist eine handgeführte motorbetriebene Säge bekannt, in deren Gehäuse eine Lichtquelle angeordnet ist. Diese Lichtquelle wirft im Bereich vor dem Schneidwerkzeug in Schnittrichtung der Maschine einen gebündelten Lichtstrahl auf das Werkstück. Auf dem Werkstück erscheint der Strahl als Punkt. Wenn dieser Lichtpunkt in Übereinstimmung mit einer vorgezeichneten Rißlinie gebracht wird, dient er als Führungshilfe für eine gerade Schnittlinie. Die Bedienungsperson kann jedoch allein durch Beobachten dieses Lichtpunktes nicht feststellen, an welcher Stelle des Werkstückes das Schneidwerkzeug eingreift. Insbesondere beim Ansägen muß zusätzlich das Sägeblatt beobachtet und in Überstimmung mit der Rißlinie gebracht werden. Beim weiteren Sägen sind eventuelle Abweichungen des Sägeblatts von der Rißlinie anhand des Lichtpunktes nicht erkennbar. Falls eine Abweichung aufgetreten ist, erreicht das Sägeblatt bei Führung anhand des Lichtstrahles die Rißlinie erst allmählich wieder.

Bei stationären Großsägen ist es bekannt, die zu zersägenden Baumstämme mittels eines Laserstrahls auszurichten. Bei Handwerkzeugmaschinen sind jedoch offene Laser wegen der Verletzungsgefahr insbesondere für die Augen und des hohen Preises kaum anwendbar.

### Vorteile der Erfindung

Die erfindungsgemäße Handwerkzeugmaschine mit den kennzeichnenden Merkmalen des Anspruchs 1 hat demgegenüber den Vorteil, daß Abweichungen des Schneidwerkzeug von der Anrißlinie unmittelbar an der Lage des auftreffenden Leitstrahls erkennbar sind. Insbesondere ist auch beim Ansägen ein Ansetzen der Säge ohne Beobachtung des Sägeblatts möglich. Wenn der langgestreckte Lichtstrahl in Deckung mit der Anrißlinie gebracht wird, so ist in jedem Fall sichergestellt, daß das Schneidwerkzeug der Anrißlinie folgt.

Durch die in den abhängigen Ansprüchen aufgeführten Maßnahmen sind vorteilhafte Weiterbildungen und Verbesserungen der im Anspruch 1 angegebenen Handwerkzeugmaschine möglich. Besonders vorteilhaft ist es, als Lichtquelle eine helle Leuchtdiode zu verwenden, die unmittelbar mit Wechselstrom betrieben werden kann. Die Optik zur Aufweitung des Lichtstrahls kann eine Zylinderlinse, eine Sammellinse in Kombination mit einer Blende, einen schnell hin- und herbewegten Spiegel oder auch durch eine Kombination dieser Lösungen aufweisen. Die Ausführung mit lediglich einer Zylinderlinse hat den besonderen Vorteil, sehr preisgünstig zu sein. Durch eine Blende kann der Lichtstrahl als strichpunktierte Linie oder als Linie aus Kreuzen dargestellt werden, was ein leichteres Erkennen der von dem Leitstrahl bedeckten Anrißlinie ermöglicht. Durch Einsetzen eines Farbfilters kann insbesondere bei hellen oder dem Licht ähnlich gefärbten Werkstoffen ein besserer Kontrast zwischen Werkstoffoberfläche und projiziertem Lichtstrahl erzeugt werden.

Besonders vorteilhaft ist es, den Lichtstrahl seitlich aus der Schnittrichtung versetzen zu können. Damit läßt sich eine Schnittlinie in definiertem Abstand von einer Werkstückkante ohne besonderes Anzeichnen einer Anrißlinie bewerkstelligen. Durch eine Verstellvorrichtung, an der sich die leuchtenartige Einrichtung in zwei Achsen verdrehen läßt, wird eine exakte Parallelversetzbarkeit erreicht.

Vorteilhaft ist insbesondere, die beiden Achsen zu koppeln und mittels eines einzigen Stellrades so zu verdrehen, daß der auftreffende Strahl parallel zur Schnittlinie der Werkzeugmaschine verläuft. Dies läßt sich vorteilhaft auch durch die Wahl der Achsrichtung der Schwenkachse gemäß Anspruch 3 mit einer einzigen Achse bewerkstelligen. Die Anbringung einer Maßskala an dem Stellrad, in Zentimetern oder Zoll geeicht, ermöglicht ein seitlich versetztes Sägen ohne Abmessen des Werkstücks.

### Zeichnung

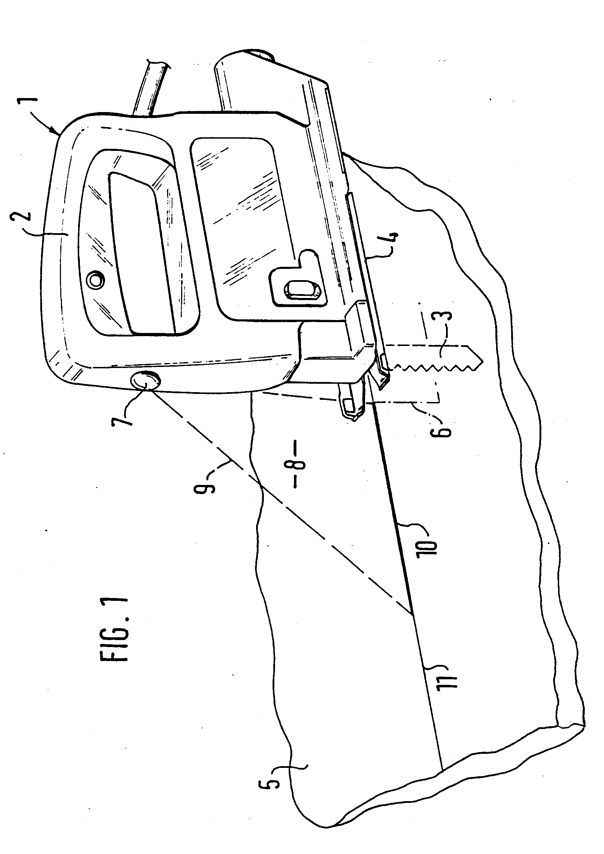

Mehrere Beispiele der Erfindung sind in der Zeichnung dargestellt und in der nachfolgenden Beschreibung näher erläutert. Figur 1 zeigt eine perspektivische Ansicht einer erfindungsgemäßen Stichsäge. Die Figuren 2 und 3 zeigen schematisch verschiedene Einrichtungen. Die Figuren 4 bis 6 zeigen ein zweites und die Figur 7 ein drittes Ausführungsbeispiel mit jeweils einer Vorrichtung zum seitlichen Verschwenken des Lichtstrahls. Die Figuren 8 und 9 zeigen ein viertes und ein fünftes Ausführungsbeispiel.

### Beschreibung der Ausführungsbeispiele

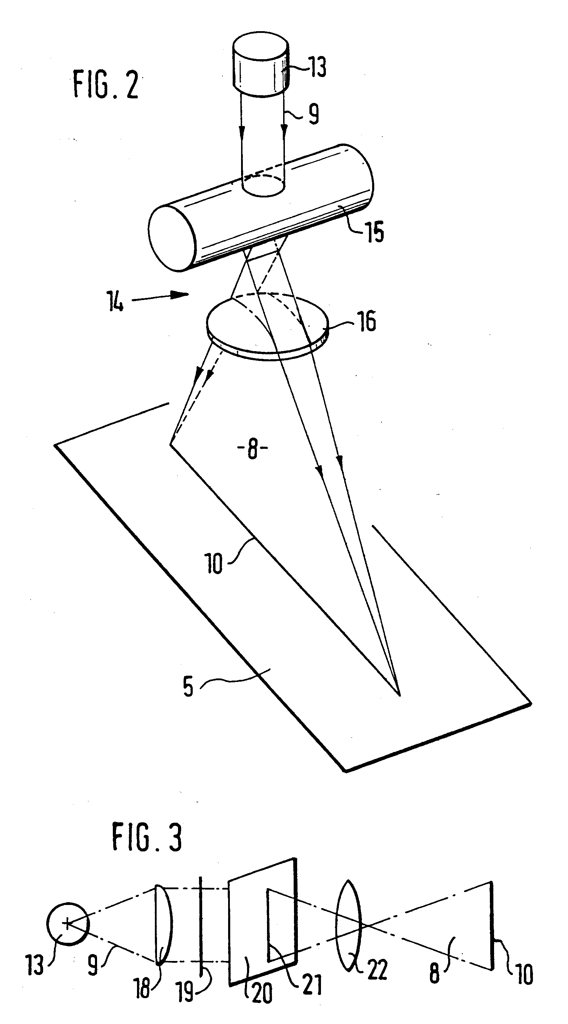

Eine als Stichsäge ausgebildete Handwerkzeugmaschine weist ein Gehäuse 1 mit einem Handgriff 2 auf. In dem Gehäuse 1 ist unter anderem ein Antriebsmotor für ein Schneidwerkzeug 3 untergebracht. Weiter hat die Stichsäge eine Fußplatte 4, die auf ein Werkstück 5 aufsetzbar ist. Das Schneidwerkzeug 3 führt in dem Werkstück 5 einen Schnitt in der Schnittebene 6 der Maschine aus. An dem Gehäuse 1 der Maschine ist in Schnittrichtung vorne eine leuchtenartige Einrichtung 7 untergebracht. Diese kann mit der Kontur des Gehäuses 1 abschließen und wird anhand der Figur 2 näher erläutert. Die Einrichtung 7 wirft einen gebündelten und zu einem deltaförmigen Lichtvorhang 8 aufgeweiteten Lichtstrahl 9 auf das vor der Maschine liegende Werkstück 5. Der auftreffende Lichtstrahl 9 wird auf dem Werkstück 5 als in Schnittrichtung verlaufende Linie 10 abgebildet. Dabei wird die scharf abgegrenzte Linie 10 in einer gewissen Länge sichtbar. Die als dünner, sehr heller Leuchtbalken erscheinende Linie 10 ist vorzugsweise ca. 30 mm lang und beginnt vorteilhaft unmittelbar vor der Fußplatte 4.

Zum Ausführen eines geraden Schnitts wird die Maschine so geführt, daß die Linie 10 mit einer vorher auf dem Werkstück 5 angebrachten Anrißlinie 11 zusammenfällt. Wenn der auftreffende Lichtstrahl 9 in seiner ganzen Länge mit der Anrißlinie 11 in Deckung gebracht wird, ist sichergestellt, daß der Schnitt genau entlang der Anrißlinie 11 erfolgt. Eine Abweichung von der Sollinie ist sofort an einem zwischen der Rißlinie 11 und der Linie 10 auftretenden Winkel festzustellen. Je länger die Linie 10 ist, desto auffälliger ist die Winkelabweichung und desto leichter und präziser läßt sich die Säge 1 führen.

Die Einrichtung 7 besteht aus einer Lichtquelle 13 und einer Optik 14, die der Strahlaufweitung und gegebenenfalls der Bündelung dient. Als Lichtquelle 13 ist in Figur 2 eine helle Leuchtdiode gezeigt. Die Leuchtdiode kann direkt an der gleichen Spannung wie der Antriebsmotor, zum Beispiel an 230 V Wechselstrom betrieben werden. Sie kann aber auch an geringerer Spannung z.B. 5V liegen. Die niedrigere Spannung kann von einer Batterie erzeugt werden oder von einem Transformator abgegriffen werden, der bei richtiger Auslegung ohne Vorwiderstand auskommt. Als dritte Möglichkeit kommt ein kapazitiver Spannungsteiler in Frage, mit zwei Kondensatoren und gegebenenfalls einem zwischengeschalteten Gleichrichter, der die Verwendung eines Elektrolytkondensators ermöglicht.

Als Lichtquelle 13 kann auch eine kleine Halogenlampe, ein Laser oder eine Laserdiode mit geeigneter Schutzvorrichtung Verwendung finden. Das Licht der Leuchtdiode fällt auf eine Zylinderlinse 15, die den Strahl 9 in einer Ebene zu einem Lichtvorhang 8 auffächert. In der Ebene quer dazu bleibt die Breite des Strahls 9 unverändert oder wird durch eine Blende, insbesondere die Austrittsöffnung des Strahls 9 begrenzt. Bei Verwendung einer Leuchtdiode mit entsprechend kleiner Leuchtfläche, z. B. 0,1 mm² braucht der Strahl 9 mit einer Breite von ca. 0,3 mm nicht zusätzlich gebündelt zu werden. In Figur 2 ist für großflächigere Lichtquellen 13 hinter der Zylinderlinse 15 eine Sammellinse 16 angeordnet, die den Lichtstrahl 9 in seiner Breite verringert.

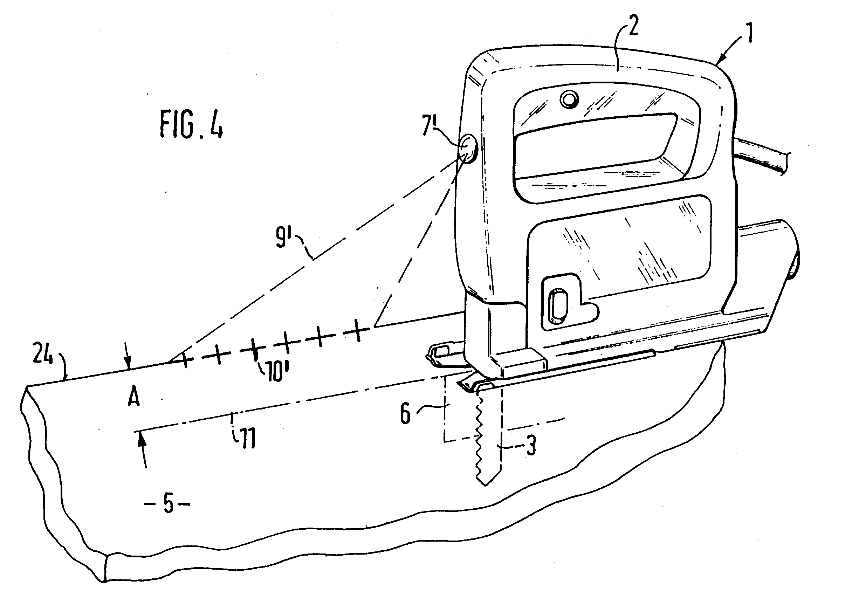

Ein weiteres Beispiel für die Gestaltung einer leuchtenartigen Einrichtung ist in Figur 3 gezeigt. Dort sind im Strahlengang nach der Lichtquelle 13 hintereinander eine Linse 18, ein Farbfilter 19, eine Spaltblende 20 mit einem schmalen, langen Schlitz 21 und eine zweite Linse 22 angeordnet. Der von der Lichtquelle 13 ausgesandte Lichtstrahl 9 wird also auch hier zu einem Lichtvorhang 8 geformt und bildet auf dem Werkstück eine scharf umgrenzte Linie 10 ab. Mittels einer entsprechend geformten, nicht gezeigten Blende können auch von einer Linie abweichende Muster, wie z.B. unterbrochene Linien, Punkte oder Kreuze (siehe Figur 4) abgebildet werden.

Wenn der Leitstrahl nicht benötigt wird, kann die Lichtquelle 13 abgeschaltet werden. Zu diesem Zweck kann auch entweder die Zylinderlinse 15 oder die Lichtquelle 13 verschoben werden. Durch eine solche absichtliche Defokussierung entsteht eine gleichmäßig ausgeleuchtete Fläche auf dem Werkstück unmittelbar vor der Schnittstelle. Dies ist besonders bei schlechten Lichtverhältnissen und Kurvenschnitten nützlich.

Im zweiten Ausführungsbeispiel gemäß Figur 4 projiziert eine verschwenkbare Einrichtung 7' eine gegenüber der Schnittebene 6 parallel seitlich um einen Abstand A versetzte Linie 10' auf das Werkstück 5. Die Linie 10' besteht hier aus miteinander fluchtenden Kreuzen. Die Linie 10' ist damit leichter mit einer Sollinie in Deckung zu bringen. Als Orientierung für die Linie 10' kann zum Beispiel eine Kante 24 des Werkstücks 5 dienen. Auf diese Weise lassen sich zur Werkstückkante 24 oder einer Anrißlinie um die Breite A parallel versetzte Schnitte durchführen. Eine angezeichnete Anrißlinie 11 in der Schnittebene 6 ist dann nicht mehr erforderlich. Die Breite A ist durch Einstellen der Einrichtung 7' vorwählbar.

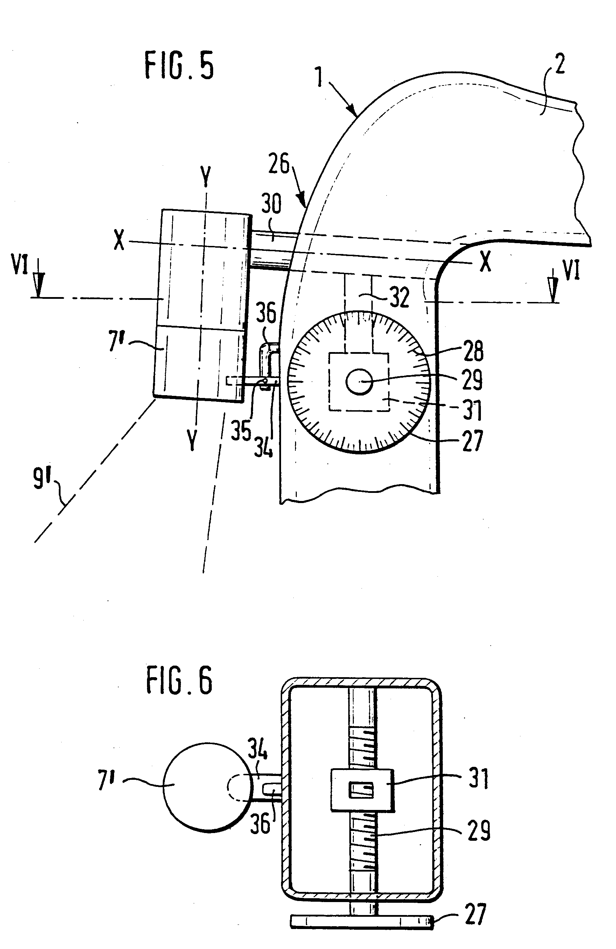

In Figur 5 ist eine Vorrichtung 26 gezeigt, mit der sich die Linie 10' seitlich versetzen läßt. Sie ermöglicht ein Verschwenken der Einrichtung 7' um zwei Achsen X und Y. Die Vorrichtung ist am Handgriff 2 der Handwerkzeugmaschine angeordnet und weist als Handhabe eine drehbare Scheibe 27 auf, die mit einer geeichten Maßskala 28 versehen ist. Über ein mit der Scheibe 27 fest verbundenes Gewinde 29 läßt sich die Einrichtung 7' um eine Drehachse X verschwenken. Diese ist vorzugsweise in Schnittrichtung ausgerichtet, kann aber aus baulichen Gründen auch davon abweichen. Sie wird von einer Stange 30 verkörpert. Mit dem Gewinde 29 steht eine Gewindehülse 31 in Eingriff, an der ein Schwenkhebel 32 in Richtung der Achse des Gewindes 29 kippbar angelenkt ist. Der Schwenkhebel 32 ist um die Achse des Gewindes 29 undrehbar gehalten und mit der Stange 30 um die Achse X drehfest verbunden. An dem aus dem Handgriff 2 hervorstehenden Ende der Stange 30 ist eine Einrichtung 7' fest angebracht. Diese wird beim Drehen an der Scheibe 27 um den gleichen Winkel um die Achse X verdreht, wie der Schwenkhebel 32.

Um eine auftretende Abweichung der projizierten Linie 10' von der Schnittrichtung ausgleichen zu können, wird die Einrichtung 7' gleichzeitig mit dem Verschwenken um die Achse X um eine etwa senkrecht dazu stehende Achse Y verdreht. Dazu ist am Gehäuse 1 ein zweiter Hebel 34 mit einem Ende ortsfest aber kippbar angebracht. Auf die gleiche Weise ist er an der Einrichtung 7' angelenkt. Der Hebel 34 ist um einen Drehpunkt 35, der zwischen dem Gehäuse 1 und der Einrichtung 7' liegt und an einem Arm 36 angeordnet ist, drehbar. Die Lage des Drehpunktes ist so zu wählen, daß die Parallelität des Lichtstrahls 9 beim Schwenken automatisch erhalten bleibt.

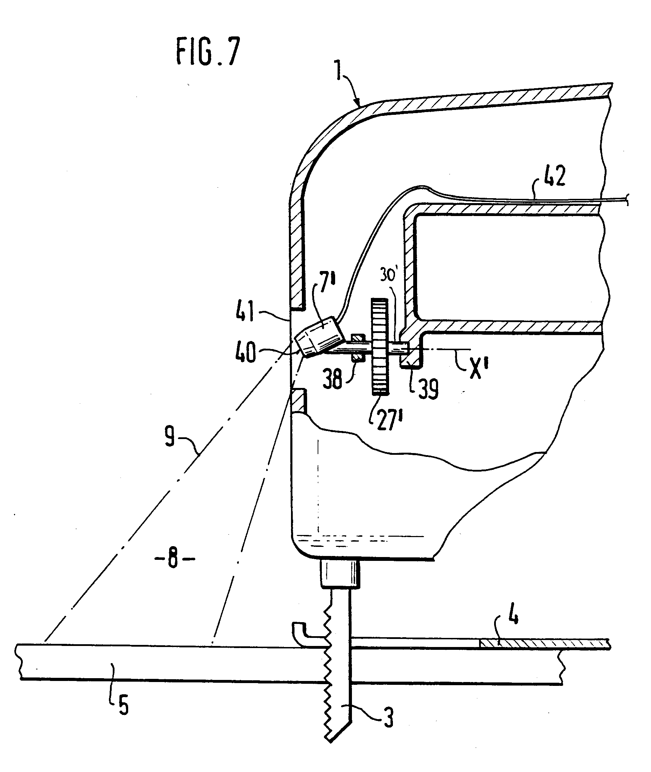

Die Vorrichtung 26 kann gemäß Figur 7 vereinfacht werden, indem die Achse X' so ausgerichtet wird, daß sie parallel zu der Ebene der Sohle der Fußplatte 4 bzw. der Werkstückoberfläche und parallel zur Schnittebene 6 der Maschine verläuft. Bei diesem Ausführungsbeispiel braucht die Einrichtung 7' nur um eine, nämlich die X'-Achse geschwenkt zu werden, um eine exakte Parallelverschiebung der projizierten Linie 10' auf ihrer ganzen Länge zu erreichen. Eine in zwei Lagern 38, 39 gelagerte Stange 30' verkörpert die X'-Achse. Eine Handhabe 27' kann direkt als Stellrad mit Maßskala an der Stange 30' angeordnet werden. Die Einrichtung 7' ist vorzugsweise so angeordnet, daß der Mittelpunkt 40 ihres Strahlaustritts auf der X'-Achse liegt. Damit wird die Lichtaustrittsfläche nur verdreht aber nicht unnötig verschoben. Der Lichtstrahl 9 fällt durch eine das Gehäuse 1 der Maschine abschließende Scheibe 41 auf das Werkstück 5. Die Einrichtung 7' bzw. deren Optik muß nicht mit der X'-Achse fluchten, sondern kann auch seitwärts versetzt oder in die Richtung des Lichtstrahls 9 gedreht sein. Der Abstahlwinkel, unter dem der Lichtvorhang 8 austritt, kann ebenfalls beliebig gewählt werden. Auch bei asymmetrischem Lichtaustritt oder asymmetrischem Lichtvorhang 8 ist bei der vorbeschriebenen Wahl der Schwenkachse X' eine exakte Parallelverschiebung der projizierten Linie 10' gewährleistet. Über eine elektrische Leitung 42 ist die Einrichtung 7' bzw. die darin befindliche Leuchtdiode direkt an den in die Maschine eingeleiteten Netzstrom angeschlossen.

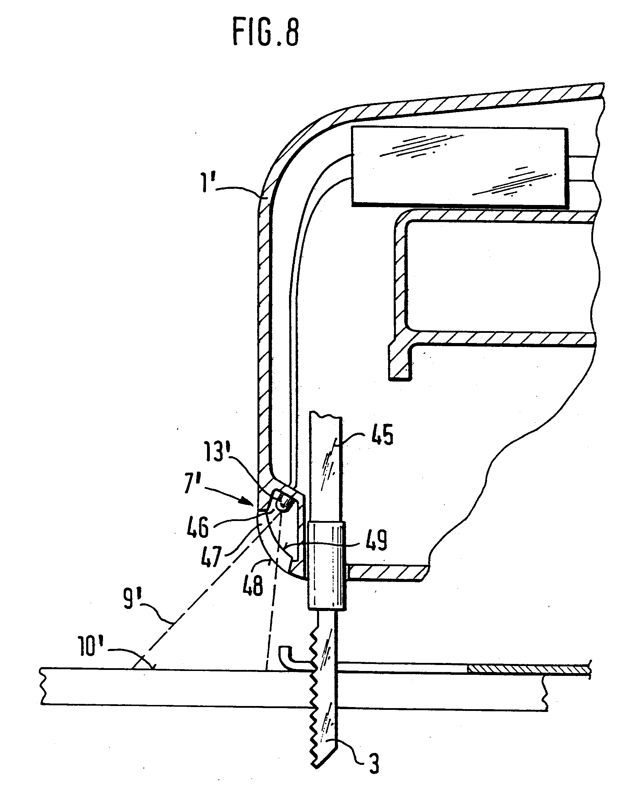

Ein viertes Ausführungsbeispiel ist anhand einer Hub- oder Stichsäge schematisch in Figur 8 gezeigt. Eine Leitstrahleinrichtung 7' ist vor einer das Sägeblatt 3 antreibenden Hubstange 45 so angebracht, daß sie die Kontur des Gehäuses 1' nicht überragt. Die Einrichtung 7' ist in eine Gehäusetasche 46 eingesetzt und besteht lediglich noch aus einer Lichtquelle 13', vorzugsweise eine helle Leuchtdiode, und einer Linse 47. Die Außenfläche 48 der Linse 47 ist der äußeren Gehäuseform der Säge angepaßt abgerundet. Ihre Innenfläche 49 wird mit gängigen rechnergestützten Verfahren so gestaltet, daß die gewünschte fokussierende Wirkung, insbesondere die einer Zylinderlinse, zustandekommt. Das Ausführungsbeispiel hat den Vorteil, daß der Licht- oder Leitstrahl 9' bzw. der Leuchtbalken 10' direkt bis vor das Sägeblatt 3 reicht und die Konstruktion außer der Lichtquelle 13' nur noch aus der Linse 47 besteht, die gleichzeitig als äußere Begrenzung bzw. Abdeckung der Einrichtung 7' dient. Außerdem baut sie sehr klein, die maximalen Abmessungen können unter 20 mm gehalten werden.

Die Einrichtung 7' kann auch seitlich der Hubstange 45 angeordnet sein, wobei dann der Lichtstrahl 9' nach innen in die Schnittebene des Sägeblattes 3 zu neigen ist (vgl. auch zweites Ausführungsbeispiel). Zur absichtlichen Defokussierung des Lichtstrahls 9' zu Beleuchtungszwecken kann hier auch eine Streuscheibe z.B. aus Plexiglas vor die Linse 47 aufgesteckt oder geschwenkt werden. Vorzugsweise ist sie unverlierbar aber beweglich mit dem Gehäuse 1' verbunden.

In einer Abwandlung kann die gesamte Leitstrahleinrichtung mit Lichtquelle, Optik und ggf. Batteriestromversorgung auf die Vorderseite der Handwerkzeugmaschine mit geeigneten Befestigungsmitteln lösbar aufgesetzt werden, um bei beengten Platzverhältnissen abgenommen werden zu können.

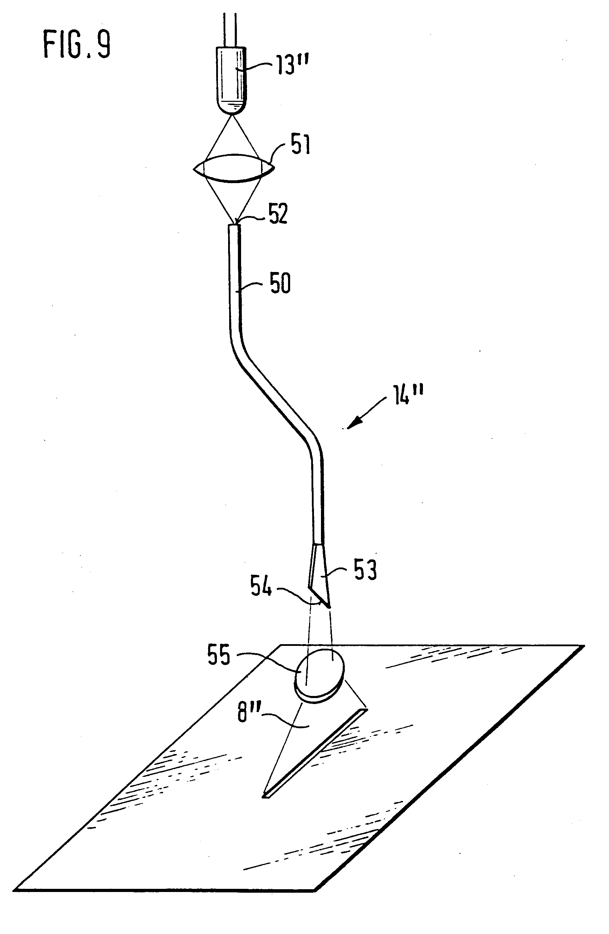

In Figur 9 ist als fünftes Beispiel das einer weiteren Optik 14'' mit einem Lichtleiter 50 aus transparentem Material, z.B. aus Plexiglas, einer Lichtleitfaser aus Kunststoff oder Glas oder aus einem Bündel solcher Fasern, im Prinzip dargestellt. Das Licht einer an beliebiger Stelle in der Handwerkzeugmaschine untergebrachten Lichtquelle 13'' wird ggf. mittels einer Primäroptik 51 auf eine vorzugsweise kreisrunde Eintrittsfläche 52 des Lichtleiters 50 gebündelt. Das andere Ende des Lichtleiters 50 ist im Bereich der Schnittstelle der Handwerkzeugmaschine im Gehäuse angeordnet, es trägt eine Klinge 53 und läuft zu einer schmalen Austrittsfläche 54 aus. Der Lichtvorhang 8'' kann dann durch geometrische Abbildung der Austrittsfläche 54 mittels einer sphärischen Linse 55 erzeugt werden. Ein die Klinge 53 und die Linse 55 umfassender Lichtaustrittsbereich kann bei dieser Ausführung sehr platzsparend in dem Raum vor bzw. neben der Hubstange (45) einer Stichsäge angebracht werden, ohne das Eckenmaß der Maschine zu vergrößern.

Die Erfindung, wie sie in den Patentansprüchen definiert ist, ist nicht auf die beschriebenen Ausführungsbeispiele beschränkt. Auch sind einzelne Elemente der Ausführungsbeispiele mit Elementen anderer Beispiele kombinierbar. Die Erfindung ist insbesondere auch auf andere Handwerkzeugmaschinen wie z. B. Kreissägen, Fräsen oder Schleifmaschinen anwendbar.

## Patentansprüche

1. Handwerkzeugmaschine, insbesondere Säge oder Fräse, mit einem Schneidwerkzeug (3) und einer Einrichtung (7, 7'), die eine Lichtquelle (13, 13') aufweist und im Bereich vor dem Schneidwerkzeug (3) in Schnittrichtung der Maschine gesehen einen gebündelten Lichtstrahl (9, 9') auf das Werkstück (5) wirft, wobei der auftreffende Lichtstrahl (9, 9') eine Längserstreckung entlang einer Linie (10, 10') aufweist,
dadurch gekennzeichnet, daß der auftreffende Lichtstrahl (9, 9') aus der Schnittebene (6) der Maschine mittels einer Vorrichtung (26) seitlich parallel versetzbar ist, indem die Vorrichtung (26) zwei Achsen (X, X', Y) aufweist, um die die Einrichtung (7, 7') und/oder die Optik (14, 14'') zur Erzeugung des Lichtstrahls (9, 9') drehbar ist.

2. Handwerkzeugmaschine nach Anspruch 1, dadurch gekennzeichnet, daß die Verstellung der beiden Achsen (X, Y) der Vorrichtung (26) so miteinander gekoppelt ist, daß der Lichtstrahl (9) exakt parallel versetzbar ist.

3. Handwerkzeugmaschine nach Anspruch 1, dadurch gekennzeichnet, daß die Einrichtung (7') beziehungsweise die Optik (14) um eine einzige Achse (X') schwenkbar ist, die parallel zur Sohlenebene der Fußplatte (4) und parallel zur Schnittebene (6) der Maschine verläuft.

4. Handwerkzeugmaschine nach Anspruch 3, dadurch gekennzeichnet, daß der Mittelpunkt (40) des Strahlaustritts der Einrichtung (7') auf der Schwenkachse (X') liegt.

5. Handwerkzeugmaschine nach einem der Ansprüche 1 bis 4, dadurch gekennzeichnet, daß die Vorrichtung (26) eine Maßskala (28) aufweist, die die Größe des seitlichen Versatzes des auftreffenden Lichtstahls (9) anzeigt.

6. Handwerkzeugmaschine nach Anspruch 1-5, dadurch gekennzeichnet, daß die Lichtquelle (13) eine Leuchtdiode ist.

7. Handwerkzeugmaschine nach einem der Ansprüche 1 bis 6, dadurch gekennzeichnet, daß der Lichtstrahl (9) mittels einer Optik (14), die eine Zylinderlinse (15, 45) aufweist, zu einem Lichtvorhang (8) aufgeweitet wird.

8. Handwerkzeugmaschine nach einem der Ansprüche 1 bis 7, dadurch gekennzeichnet, daß die Optik (14) eine Sammellinse (16) und eine Spaltblende (20) zur Strahlaufweitung besitzt.

9. Handwerkzeugmaschine nach einem der Ansprüche 1 bis 7, dadurch gekennzeichnet, daß der Lichtstrahl (9) durch einen schnell bewegten Spiegel zu einem Lichtvorhang (8) aufgeweitet wird.

10. Handwerkzeugmaschine nach einem der vorhergehenden Ansprüche, dadurch gekennzeichnet, daß der Lichtstrahl (9) mittels einer Blende (20) als aus Punkten, Strichen und/oder Kreuzen bestehende unterbrochene Linie (10) abgebildet wird.

11. Handwerkzeugmaschine nach einem der vorhergehenden Ansprüche, dadurch gekennzeichnet, daß in den Strahlengang ein Farbfilter (19) einfügbar ist.

12. Handwerkzeugmaschine nach einem der vorhergehenden Ansprüche, dadurch gekennzeichnet, daß der Lichtstrahl (9) so defokussierbar ist, daß auf dem zu bearbeitenden Werkstück eine gleichmäßig ausgeleuchtete Fläche entsteht.

13. Handwerkzeugmaschine nach einem der vorhergehenden Ansprüche, dadurch gekennzeichnet, daß die Optik (14') eine Linse (47) aufweist, deren Außenfläche (48) abgerundet und der Form des Gehäuses (1) angepaßt ist.

14. Handwerkzeugmaschine nach einem der vorhergehenden Ansprüche, dadurch gekennzeichnet, daß bei einer Hubsäge eine Leitstrahleinrichtung (7') bzw. der Lichtaustrittsbereich des Lichtvorhangs (8) platzsparend vor oder neben der Hubstange (45) angeordnet ist.

15. Handwerkzeugmaschine nach einem der vorhergehenden Ansprüche, dadurch gekennzeichnet, daß die Optik (14'') der Leitstrahleinrichtung einen Lichtleiter (50) mit vorzugsweise klingenförmiger Austrittsfläche (54) aufweist.

## Claims

1. Power hand tool, especially saw or mill, having a cutting tool (3) and a device (7, 7') which has a light source (13, 13') and throws a focused light beam (9, 9') onto the workpiece (5) in the region in front of the cutting tool (3), seen in the cutting direction of the tool, the incident light beam (9, 9') having a longitudinal extension along a line (10, 10'), characterized in that the incident light beam (9, 9') can be adjusted parallel sideways, out of the cutting plane (6) of the tool, by means of a device (26), by the device (26) having two axes (X, X', Y) about which the device (7, 7') and/or the optics (14, 14'') for generating the light beam (9, 9') can be rotated.

2. Power hand tool according to Claim 1, characterized in that the adjustments of the two axes (X, Y) of the device (26) are coupled to each other in such a way that the light beam (9) can be adjusted exactly parallel.

3. Power hand tool according to Claim 1, characterized in that the device (7') or the optics (14) can be pivoted about a single axis (X') which runs parallel to the sole plane of the foot plate (4) and parallel to the cutting plane (6) of the tool.

4. Power hand tool according to Claim 3, characterized in that the centre point (40) of the beam exit from the device (7') lies on the pivoting axis (X').

5. Power hand tool according to one of Claims 1 to 4, characterized in that the device (26) has a measuring scale (28) which indicates the magnitude of the sideways displacement of the incident light beam (9).

6. Power hand tool according to Claims 1 to 5, characterized in that the light source (13) is a light-emitting diode.

7. Power hand tool according to one of Claims 1 to 6, characterized in that the light beam (9) is expanded into a light curtain (8) by means of optics (14) which have a cylindrical lens (15, 45).

8. Power hand tool according to one of Claims 1 to 7, characterized in that the optics (14) have a collecting lens (16) and a slit diaphragm (20) for the beam expansion.

9. Power hand tool according to one of Claims 1 to 7, characterized in that the light beam (9) is expanded into a light curtain (8) by means of a rapidly moving mirror.

10. Power hand tool according to one of the preceding claims, characterized in that the light beam (9) is imaged, by means of a diaphragm (20), as a broken line (10) consisting of points, dashes and/or crosses.

11. Power hand tool according to one of the preceding claims, characterized in that a colour filter (19) can be inserted into the beam path.

12. Power hand tool according to one of the preceding claims, characterized in that the light beam (9) can be defocused in such a way that a uniformly illuminated area is produced on the workpiece to be machined.

13. Power hand tool according to one of the preceding claims, characterized in that the optics (14') have a lens (47) whose outer surface (48) is rounded off and matched to the shape of the housing (1).

14. Power hand tool according to one of the preceding claims, characterized in that, in a power hacksaw, a light beam device (7') or the light exit region of the light curtain (8) is arranged in a space-saving manner in front of or beside the reciprocating rod (45).

15. Power hand tool according to one of the preceding claims, characterized in that the optics (14'') of the light beam device have a waveguide (50) having a preferably blade-shaped exit surface (54).

## Revendications

1. Outil à main, notamment scie ou fraise, avec un outil de coupe (3) et un dispositif (7, 7') qui comporte une source lumineuse (13, 13') et qui projette sur la pièce d'oeuvre (5) un faisceau lumineux focalisé (9, 9') sur la zone en avant de l'outil de coupe (3) dans la direction de coupe de la machine, ou le faisceau lumineux (9, 9') incident comporte une extension longitudinale le long d'une ligne (10'), outil à main caractérisé en ce que le faisceau lumineux incident (9') est susceptible d'être décalé parallèlement et latéralement à partir du plan de coupe (6) de la machine au moyen d'un dispositif (26), ce dispositif (26) comportant deux axes (X', Y') autour desquels le dispositif (7, 7') et/ou l'optique (14', 14'') pour la production du faisceau lumineux (9, 9') est susceptible de tourner.

2. Outil à main selon la revendication 1, caractérisé en ce que les réglages des deux axes (X, Y) du dispositif (26) sont couplés ensemble de façon que le faisceau lumineux (9) soit susceptible d'être décalé de façon exactement parallèle.

3. Outil à main selon la revendication 1, caractérisé en ce que le dispositif (7') ou bien l'optique (14) est susceptible de pivoter autour d'un axe unique (X') qui s'étend parallèlement au plan du fond de la semelle (4) et parallèlement au plan de coupe (6) de la machine.

4. Outil à main selon la revendication 3, caractérisé en ce que le centre (40) de la sortie du faisceau du dispositif (7') se situe sur l'axe de pivotement (X').

5. Outil à main selon une des revendications 1 à 4, caractérisé en ce que le dispositif (26) comporte une graduation, qui indique l'importance du décalage latéral du faisceau lumineux incident (9).

6. Outil à main selon la revendication 1 ou 5, caractérisé en ce que la source lumineuse (13) est une diode lumineuse.

7. Outil à main selon une des revendications 1 à 6, caractérisé en ce que le faisceau lumineux (9) est élargi en un rideau lumineux (8) au moyen d'une optique (14) qui comporte une lentille cylindrique (15, 45).

8. Outil à main selon une des revendications 1 à 7, caractérisé en ce que l'optique (14) comporte pour l'élargissement du faisceau une lentille convergeante (16) et un diaphragme à fente (20).

9. Outil à main selon une des revendications 1 à 7, caractérisé en ce que le faisceau lumineux (9) est élargi en un rideau lumineux (8) par un miroir déplacé rapidement.

10. Outil à main selon une des précédentes revendications, caractérisé en ce que le faisceau lumineux (9) est reproduit au moyen d'un diaphragme (20) sous la forme d'une ligne (10) interrompue constituée de points, de tirets et/ou de croix.

11. Outil à main selon une des précédentes revendications, caractérisé en ce que le filtre coloré (19) est susceptible d'être inséré dans le trajet du faisceau.

12. Outil à main selon une des précédentes revendications, caractérisé en ce que le faisceau lumineux (9) est susceptible d'être défocalisé de façon que sur la pièce d'oeuvre à usiner, une surface uniformément éclairée apparaisse.

13. Outil à main selon une des précédentes revendications, caractérisé en ce que l'optique (14') comporte une lentille (7) dont la surface externe (48) est arrondie et adaptée à la forme du carter (1).

14. Outil à main selon une des précédentes revendications, caractérisé en ce que dans le cas d'une scie alternative, un dispositif de faisceau de guidage (7') ou bien la zone de sortie de la lumière du rideau lumineux (8) est disposé devant ou à côté de la tige de levage (45) en économisant la place.

15. Outil à main selon une des précédentes revendications, caractérisé en ce que l'optique (14'') du dispositif du faisceau de guidage comporte un conducteur de lumière (50) avec de préférence une surface de sortie en forme de lame (54).
